Europäisches Patentamt

European Patent Office

Office européen des brevets

(19)

(11) Numéro de publication : **0 441 696 A1**

## (12) DEMANDE DE BREVET EUROPEEN

(21) Numéro de dépôt : 91400268.8

(22) Date de dépôt : 05.02.91

(51) Int. Cl.⁵ : **C03B 23/047**, C03B 37/15, G02B 6/26, G02B 6/28

(30) Priorité : 05.02.90 FR 9001300

(43) Date de publication de la demande :
14.08.91 Bulletin 91/33

(84) Etats contractants désignés :
CH DE ES GB IT LI NL

(71) Demandeur : FRANCE TELECOM
6 place d'Alleray
F-75015 Paris (FR)

(72) Inventeur : Le Noane, Georges
Kerrougant Bras
F-22730 Tregastel (FR)
Inventeur : Grosso, Philippe
Route de Trebourden, Servel
F-22300 Lannion (FR)

(74) Mandataire : Martin, Jean-Jacques et al
Cabinet REGIMBEAU 26, Avenue Kléber
F-75116 Paris (FR)

(54) Procédés de fabrication de haute précision de capillaires, d'embouts de raccordement et de dispositifs de raccordement pour fibres optiques.

(57) La présente invention concerne un procédé de fabrication d'un tube capillaire (10) de haute précision, présentant un trou intérieur (11), caractérisé en ce qu'il comporte les étapes suivantes :

— préparation d'un barreau creux de silice présentant un trou central, au cours de laquelle le rapport du diamètre dudit trou central au diamètre extérieur dudit barreau creux est amené à la valeur désirée pour le rapport du diamètre dudit trou intérieur au diamètre extérieur dudit tube capillaire,

— étirage homothétique du barreau creux de silice de façon à obtenir les valeurs désirées pour le diamètre du trou intérieur et le diamètre extérieur du tube capillaire.

Application au domaine des techniques de raccordement pour fibres optiques multimodes et monomodes.

EP 0 441 696 A1

# PROCEDES DE FABRICATION DE HAUTE PRECISION DE CAPILLAIRES, D'EMBOUTS DE RACCORDEMENT ET DE DISPOSITIFS DE RACCORDEMENT POUR FIBRES OPTIQUES

La présente invention concerne un procédé de fabrication d'un tube capillaire de haute précision, un procédé de fabrication d'un embout de raccordement pour fibres optiques et un procédé de fabrication d'un dispositif de raccordement pour fibres optiques.

L'invention trouve une application particulièrement avantageuse dans le domaine des techniques de raccordement pour fibres optiques multimodes et monomodes.

Les procédés actuellement connus pour fabriquer des capillaires ou des embouts de raccordement concernent, soit les systèmes d'étirage de verre qui aboutissent à des précisions incompatibles avec une telle application, soit, plus généralement, les matériaux céramiques qui peuvent être mis en oeuvre par plusieurs voies. En particulier, le procédé d'obtention de capillaires et embouts de raccordement en céramique le plus connu consiste à extruder la matière sous forme d'un capillaire, puis à cuire le matériau, ce qui produit un retrait important. La précision du capillaire ainsi obtenu est alors nettement insuffisante pour répondre aux besoins de capillaires et embouts de raccordement pour fibres optiques. Il est alors nécessaire d'usiner le trou intérieur et la surface extérieure de l'embout pour obtenir l'ensemble des cotes recherchées : diamètre intérieur, diamètre extérieur et concentricité. Dans le cas d'un embout, il faut ensuite réaliser, la plupart du temps, un cône d'entrée par un usinage à nouveau long et coûteux. Il existe, bien entendu, une possibilité technologique pour réaliser ce cône directement en employant des procédés tels que le pressage isostatique ou le moulage par injection basse pression. Toutefois, l'inconvénient majeur demeure le retrait de la matière, et il faut donc procéder à un usinage lent, très délicat et onéreux qui impose ensuite des contrôles sévères et coûteux.

Ainsi, le problème technique à résoudre par l'objet de la présente invention est de proposer un procédé de fabrication d'un tube capillaire présentant un trou intérieur, procédé qui permettrait d'aboutir directement à une très haute précision géométrique (diamètre intérieur, diamètre extérieur, concentricité), à très faible coût, avec une excellente résistance mécanique et des états de surface nettement supérieurs à ceux obtenus par des procédés d'usinage et de polissage.

La solution au problème technique posé consiste, selon la présente invention, en ce que ledit procédé de fabrication comporte les étapes suivantes :

– préparation d'un barreau creux de silice présentant un trou central, au cours de laquelle le rapport du diamètre dudit trou central au diamètre extérieur dudit barreau creux est amené à la valeur désirée pour le rapport du diamètre dudit trou intérieur au diamètre extérieur dudit tube capillaire,

– étirage homothétique du barreau creux de silice de façon à obtenir les valeurs désirées pour le diamètre du trou intérieur et le diamètre extérieur du tube capillaire.

Selon un premier mode de mise en oeuvre du procédé selon l'invention, ladite étape de préparation du barreau creux de silice consiste en un usinage direct dudit barreau.

Selon un deuxième mode de mise en oeuvre du procédé selon l'invention, ladite étape de préparation du barreau creux de silice comprend une première étape de rétreint d'un barreau creux initial de silice dont le diamètre du trou central et le diamètre extérieur sont supérieurs à ceux du barreau creux, ledit rétreint amenant le diamètre du trou central du barreau creux initial à la valeur désirée pour le diamètre du trou central du barreau creux, et une deuxième étape d'usinage du diamètre extérieur du barreau creux initial après rétreint à la valeur désirée pour le diamètre extérieur du barreau creux.

Ainsi, le procédé de fabrication d'un tube capillaire selon l'invention est à la fois simple et précis. Il repose sur le concept d'un barreau de forte capacité, susceptible de fournir plusieurs centaines de mètres à plusieurs kilomètres de capillaire par étirage d'un barreau de grande précision géométrique obtenu par usinage, avec ou sans rétreint complémentaire, aboutissant, dans la mesure où le procédé d'étirage est contrôlé dans une plage déterminée de tension et donc, dans la mesure où aucun rétreint du trou central (ou un rétreint très minime mais parfaitement reproductible), à un capillaire ayant exactement le même rapport diamètre du trou central - diamètre extérieur que le barreau creux de départ.

De façon avantageuse, en particulier pour la réalisation de tubes capillaires de très haute précision utilisables notamment dans le domaine des technologies de raccordement, le barreau creux est constitué d'une silice de très bonne qualité ayant une très bonne homogénéité et une bonne pureté. La présence de trop nombreuses impuretés ou de bulles est en effet un facteur de déstabilisation de la tension de fibrage et du rétreint, et serait susceptible d'occasionner un rendement moindre et des contrôles plus sévères sur le procédé. On peut ainsi avantageusement usiner des barreaux creux à partir de lingot de silice naturelle ou synthétique obtenue par des méthodes efficaces et économiques comme les méthodes de torche plasma.

Disposant d'un tube capillaire de haute précision géométrique, il est alors possible de réaliser des embouts de raccordement pour fibres optiques présentant la même précision. Dans ce but, un procédé de fabrication d'un embout de raccordement pour fibres optiques est remarquable en ce qu'il comporte les étapes suivantes :

- réalisation d'un tube capillaire de haute précision à l'aide du procédé de fabrication d'un tube capillaire selon l'invention,
- coupe dudit tube capillaire en une baguette présentant deux faces d'extrémité,
- préparation desdites faces d'extrémité,
- usinage sur une des faces d'extrémité d'un cône concentrique au trou intérieur.

Les opérations de coupe, de préparation des faces et d'usinage du cône peuvent être entièrement automatisées selon les techniques connues de décolletage par exemple, et parce que la silice offre l'avantage d'une facilité d'usinage nettement supérieure aux céramiques qui rend ces opérations très peu coûteuses.

On notera aussi que le procédé de fabrication d'un embout de raccordement selon l'invention, en fournissant des embouts de raccordement de silice de bonne qualité, permet de réaliser des applications avantageuses notamment dans le domaine des techniques de raccordement par fibres optiques, par l'obtention d'un état de surface remarquable donné par l'étirage, par la compatibilité en matière de collage dans le cas des fibres de silice, et surtout par la transparence de l'embout de raccordement qui autorise un contrôle de réception des pièces nettement facilité par l'utilisation de méthodes optiques transversales peu coûteuses et capables de mesurer le diamètre extérieur, le diamètre du trou central et l'excentrement.

Enfin, la transparence des embouts de raccordement ainsi produits permet également la mise en oeuvre d'un procédé de fabrication d'un dispositif de raccordement pour fibres optiques particulièrement avantageux, remarquable en ce qu'il comporte les étapes suivantes :

- réalisation d'un embout de raccordement à l'aide du procédé de fabrication d'un embout de raccordement selon l'invention,
- collage d'une fibre optique à l'intérieur dudit trou intérieur à l'aide d'une colle polymérisable sous l'influence d'un rayonnement ultraviolet.

Les méthodes de polymérisation de colles ultraviolettes sont souvent utilisées dans ce domaine pour leurs excellentes caractéristiques dans le temps et leur facilité d'utilisation.

La description qui va suivre, en regard des dessins annexés donnés à titre d'exemples non limitatifs, fera bien comprendre en quoi consiste l'invention et comment elle peut être réalisée.

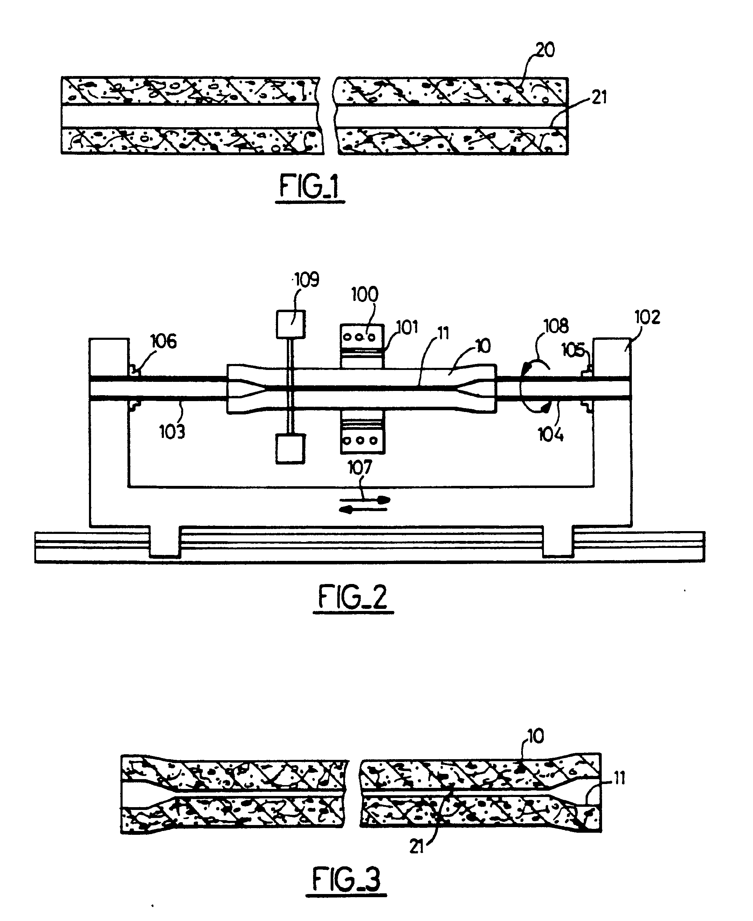

. La figure 1 est une vue en coupe d'un barreau creux de silice préparé pour l'opération d'étirage,
. la figure 2 est le schéma d'un dispositif de rétreint d'un barreau creux initial de silice,

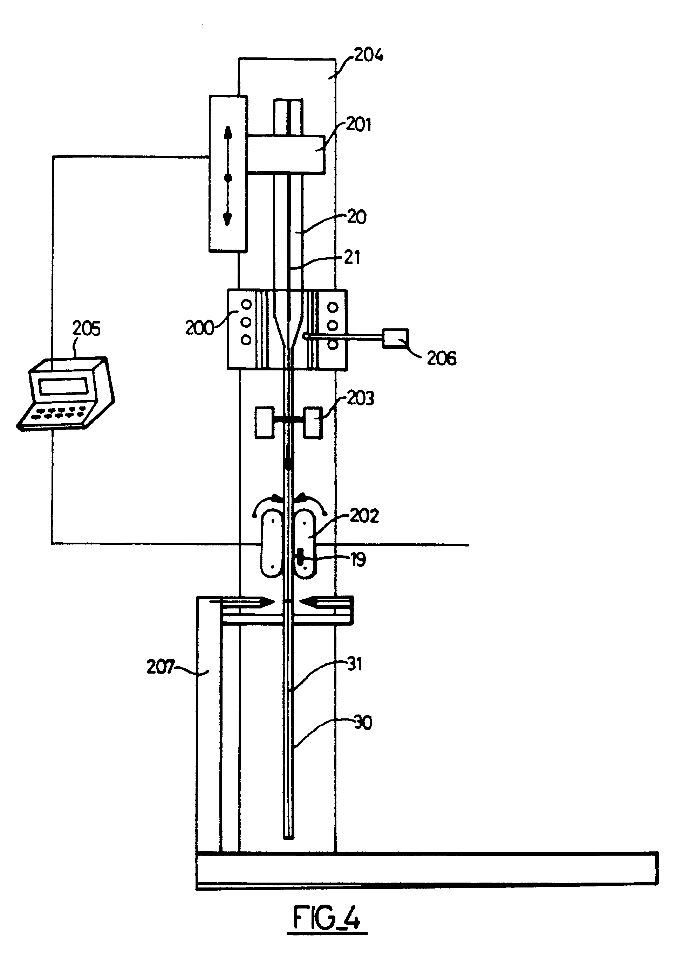

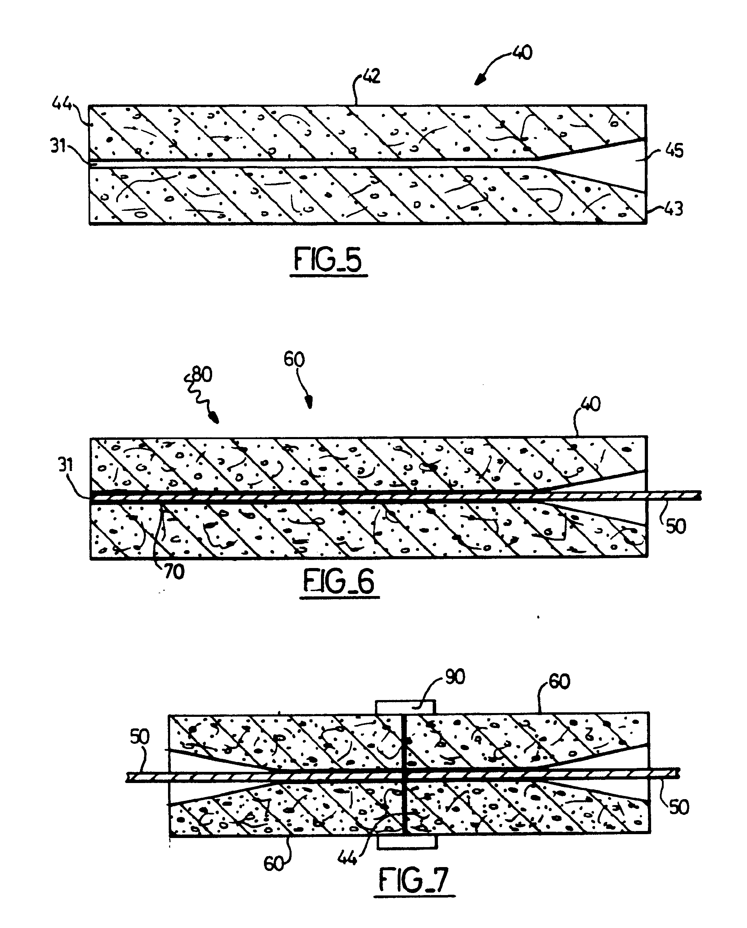

. la figure 3 est une vue en coupe du barreau creux initial après l'opération de rétreint,
. la figure 4 est le schéma d'un dispositif d'étirage du barreau creux de la figure 1,
. la figure 5 est une vue en coupe d'un embout de raccordement pour fibres optiques réalisé à partir d'un tube capillaire fabriqué à l'aide du procédé selon l'invention,
. la figure 6 est une vue en coupe d'un dispositif de raccordement pour fibres optiques fabriqué à l'aide du procédé selon l'invention,
. la figure 7 montre un assemblage de deux dispositifs de raccordement pour fibres optiques conformes à celui représenté à la figure 6.

La figure 1 montre, en coupe, un barreau creux 20 de silice de bonne qualité présentant un trou central 21. Ce barreau 20 est destiné à la fabrication d'un tube capillaire de haute précision, présentant un trou intérieur, selon un procédé qui consiste, dans une première étape, en une préparation dudit barreau creux 20 de silice au cours de laquelle le rapport du diamètre dudit trou central 21 au diamètre extérieur du barreau creux 20 est amené à la valeur désirée pour le rapport du diamètre dudit trou intérieur au diamètre extérieur dudit tube capillaire.

Cette opération de préparation peut être exécutée par usinage directe dudit barreau 20. Comme l'illustre la figure 2, elle peut également être réalisée par rétreint d'un barreau creux 10 initial de silice dont le diamètre du trou central 11 et le diamètre extérieur sont supérieurs à ceux du barreau creux 20, ledit rétreint amenant le diamètre du trou central 11 du barreau creux 10 initial à la valeur désirée pour le diamètre du trou central 21 du barreau creux 20.

Sur la figure 2 est représenté un dispositif de rétreint comprenant un four horizontal 100, par exemple un four HF disposant d'un suscepteur graphite 101, une partie support 102 assurant la préhension et la rotation du barreau creux 10 initial pendant l'opération de rétreint, le barreau 10 ayant été préalablement soudé à deux tubes support 103, 104. Cette partie support se présente en fait comme un tour classique de verrier disposant de deux mandrins 105, 106 ; l'opération de rétreint, malgré la forte épaisseur de silice du barreau creux 10, est rendue possible par l'emploi du four HF graphite qui porte la silice de façon homogène à la température suffisante pour que les forces de tension superficielles agissent et rétreignent le barreau selon un principe bien connu du métier de verrier. Il faut cependant noter que cette opération de rétreint n'est homogène réellement que dans la mesure où la masse à rétreindre est homogène. Le fait de disposer de barreaux creux usinés avec précision et le fait de disposer d'un moyen de chauffage homogène comme le four amène donc à opérer un rétreint très contrôlable par la température du four et la vitesse de déplacement du barreau dans le four et donc à obtenir un trou final à la dimension recherchée et parfaitement cylindrique. Comme le montre la figure 2, le tube est en effet animé d'un mouvement de translation 107 et d'un mouvement de rotation 108. Le contrôle de la dimension intérieure finale du trou 21 peut être effectué in-situ par une mesure optique 109 et donner lieu à un contrôle précis du rétreint par le passage plus ou moins rapide du tube dans le four.

La figure 3 montre le barreau creux initial 10 après rétreint et obtention du trou central 21 à partir du trou central 11 du barreau 10. L'opération de préparation peut alors avantageusement comprendre une étape de reprise qui, après mesure précise du trou intérieur 21, donne par usinage la dimension définitive recherchée pour le diamètre extérieur du barreau 20, afin d'obtenir avec exactitude le rapport recherché pour le futur tube capillaire. A titre d'exemple, le trou intérieur 21 après rétreint aura une dimension d'environ 2,4 mm pour un diamètre extérieur qui, partant de 40 mm avant rétreint, peut aboutir ainsi à un diamètre d'environ 38 mm pour conduire à la production de capillaire de 125 μm de diamètre intérieur et 2 mm de diamètre extérieur. On comprendra donc à la description de ce procédé que les cotes précises sont à déterminer en fonction de l'objectif recherché et du barreau creux initial et qu'il suffit d'une mesure précise du trou intérieur 21 après rétreint pour fixer la cote définitive du diamètre extérieur.

Après la première étape de préparation ayant conduit au barreau creux 20 de silice de la figure 1, ce dernier est étiré de façon rigoureusement homothétique, afin de conserver le même rapport diamètre du trou/diamètre extérieur, et jusqu'à obtenir les valeurs désirées pour le diamètre du trou intérieur et le diamètre extérieur du tube capillaire final. La machine d'étirage montrée à la figure 4 comprend un four d'étirage 200, un dispositif 201 de préhension du barreau et de descente du barreau dans le four, un dispositif de tirage représenté par une chenille 202 de tirage, un dispositif 203 de mesure du diamètre extérieur et du diamètre intérieur 31 du tube capillaire 30, un contrôleur de tension incorporé à la chenille de tirage 202, un dispositif de coupe et de récupération des baguettes de capillaires étirés 30, un bâti 204, un dispositif 205 de pilotage programmable pour l'affichage des vitesses de descente de barreau et d'étirage, un dispositif 206 mesurant la température des fours.

Afin de conserver l'homothétie du barreau percé 20 et préparé aux cotes désirées, la machine d'étirage est équipée pour resserrer les tolérances sur la température et les vitesses de descente de barreau et d'étirage. En effet, le phénomène de rétreint, qui détruit l'homothétie, doit être connu et maîtrisé pour devenir négligeable dans le tube capillaire 30. La vitesse de rétreint augmente quand la viscosité diminue, on conçoit donc aisément qu'il faille fibrer à une vitesse suffisamment élevée (diminution du temps de séjour dans le four) et à basse température (augmentation de la viscosité) pour maîtriser l'absence de rétreint ou un rétreint minime bien contrôlé. Les deux paramètres vitesse et température définissent une tension de fibrage qui sert ainsi de limite basse pour négliger le rétreint.

Dans ces conditions, ce contrôle du diamètre extérieur suffit pour affirmer que les deux diamètres sont dans les tolérances demandées.

Il faut cependant concevoir que pour un procédé industriel, aussi précis soit-il par exploitation du procédé objet de l'invention, il est très avantageux d'y adjoindre un contrôle en ligne du diamètre intérieur, rendu dans ce cas possible par la transparence du matériau. Il met ainsi à l'abri d'éventuelles dispersions de viscosité de la silice d'un barreau à l'autre et de variations mal contrôlées des diamètres extérieurs des barreaux. Il intervient donc comme un contrôle qualité en ligne. Dans la pratique, la mesure de tension permet de corréler le couple température du four-viscosité de la silice, la mesure du diamètre extérieur permet d'ajuster la vitesse linéaire des chenilles de tirage et la mesure du diamètre intérieur intervient comme un contrôle du "rétreint nul" spécifique à chaque barreau.

A titre d'exemple, considérons une préforme de diamètre extérieur 40 mm pour obtenir un tube capillaire de 2 mm de diamètre. Les rapports de diamètre sont de 20 et les rapports de vitesses de 400. Ainsi, à 10 m/mn de vitesse d'étirage, la descente du barreau percé dans le four est modulée autour de 25 mm/mn. La vis à bille choisie pour assurer cette descente est de la classe 15 μm/m, ce qui assure une grande stabilité sur la descente du barreau percé.

Le four alimenté par un générateur de 50 kW a une zone chaude de 75 mm environ, ce qui implique un temps de séjour pour la section de barreau percé concernée de moins de trois minutes. La mesure simultanée des deux diamètres (extérieur et intérieur) se fait à la sortie du four avec une fréquence d'échantillonnage grande devant la vitesse de défilement. La chenille de tirage travaille sans glissement avec une grande régularité de vitesse (moto réducteur à courant continu bouclé sur tachymétrie). Sous la chenille, le capillaire ainsi obtenu a une précision nettement inférieure au micron pour le diamètre extérieur.

Afin d'obtenir un embout 40 de raccordement du type de celui représenté sur la figure 5, le tube capillaire 30 est coupé en baguettes 42 par le dispositif 207 de coupe et de récupération dont est munie la machine d'étirage de la figure 4. A partir de la baguette 42, l'embout 40 de raccordement est réalisé après préparation des faces 43, 44 de la baguette et usinage sur une 43 des faces d'un cône 45 d'entrée, concentrique du trou intérieur 31.

La figure 6 montre, en coupe, un dispositif 60 de raccordement pour fibres optiques réalisé à partir d'un embout 40 de raccordement analogue à celui de la figure 5, par collage d'une fibre optique 50 à l'intérieur du trou intérieur 31 à l'aide d'une colle 70 polymérisable sous l'influence d'un rayonnement ultraviolet 80.

La figure 7 est un assemblage de deux dispositifs 60 de raccordement de deux fibres optiques 50 dans lequel les deux embouts de raccordement sont accolés par leur faces 44 et alignés dans un manchon élastique 90 de maintien.

**Revendications**

1. Procédé de fabrication d'un tube capillaire (30) de haute précision, présentant un trou intérieur 31), caractérisé en ce qu'il comporte les étapes suivantes :
   – préparation d'un barreau creux (20) de silice présentant un trou central (21), au cours de laquelle le rapport du diamètre dudit trou central au diamètre extérieur dudit barreau creux (20) est amené à la valeur désirée pour le rapport du diamètre dudit trou intérieur (31) au diamètre extérieur dudit tube capillaire (30),
   – étirage homothétique du barreau creux (20) de silice de façon à obtenir les valeurs désirées pour le diamètre du trou intérieur (31) et le diamètre extérieur du tube capillaire (30).

2. Procédé selon la revendication 1, caractérisé en ce que ladite étape de préparation du barreau creux (20) de silice consiste en un usinage direct dudit barreau.

3. Procédé selon la revendication 1, caractérisé en ce que ladite étape de préparation du barreau creux (20) de silice comprend une première étape de rétreint d'un barreau creux initial (10) de silice dont le diamètre du trou central (11) et le diamètre extérieur sont supérieurs à ceux du barreau creux (20), ledit rétreint amenant le diamètre du trou central (11) du barreau creux initial (10) à la valeur désirée pour le diamètre du trou central (21) du barreau creux (20), et une deuxième étape d'usinage du diamètre extérieur du barreau creux initial (10) après rétreint à la valeur désirée pour le diamètre extérieur du barreau creux (20).

4. Procédé de fabrication d'un embout (40) de raccordement pour fibres optiques, caractérisé en ce qu'il comporte les étapes suivantes :
   – réalisation d'un tube capillaire (30) de haute précision à l'aide du procédé de fabrication selon la revendication 1 ou 2,
   – coupe dudit tube capillaire (30) en une baguette (42) présentant deux faces (43, 44) d'extrémité,
   – préparation desdites faces (43, 44) d'extrémité,
   – usinage sur une (43) des faces d'extrémité d'un cône (45) d'entrée, concentrique au trou intérieur (31).

5. Procédé de fabrication d'un dispositif (60) de raccordement pour fibres optiques, caractérisé en ce qu'il comporte les étapes suivantes :
   – réalisation d'un embout (40) de raccordement à l'aide du procédé de fabrication selon la revendication 4,
   – collage d'une fibre optique (50) à l'intérieur dudit trou intérieur (31) à l'aide d'une colle (70) polymérisable sous l'influence d'un rayonnement ultraviolet (80).

FIG_1

FIG_2

FIG_3

FIG_4

FIG_5

FIG_6

FIG_7

Office européen
des brevets

**RAPPORT DE RECHERCHE EUROPEENNE**

Numéro de la demande

EP 91 40 0268

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 259 877 (ASAHI GLASS CO., LTD) * Le document en entier * --- | 1,4,5 | C 03 B 23/047 C 03 B 37/15 G 02 B 6/26 G 02 B 6/28 |
| X | FR-A-1 483 524 (GENERAL ELECTRIC CO.) * Le document en entier * --- | 1 | |
| X | FR-A-1 307 785 (VEREINIGUNG VOLKSEIGENER BETRIEBE GLAS) * Le document en entier * --- | 1 | |
| Y | GB-A-2 133 786 (ASSOCIATED ELECTRICAL INDUSTRIES LTD) * Le document en entier * --- | 1,3 | |
| Y | US-A-3 652 248 (LOXLEY) * Le document en entier * --- | 1 | |
| A | FR-A-2 088 486 (CORNING GLASS WORKS) * Page 11, ligne 37 - page 12, ligne 5; revendication 10 * --- | 2 | |
| A | US-A-3 455 666 (BAZINET) * Revendication 1; figure 1 * --- | 2 | DOMAINES TECHNIQUES RECHERCHES (Int. Cl.5) C 03 B G 02 B |
| A | FR-A-2 436 111 (MAUSSONNE) * Le document en entier * --- | 1,3 | |
| P,X | DE-A-3 913 875 (HERAEUS QUARZSCHMELZE) * Figure 3; colonne 4, lignes 34-68; revendications * ----- | 1,4 | |

Le présent rapport a été établi pour toutes les revendications

| Lieu de la recherche | Date d'achèvement de la recherche | Examinateur |
|---|---|---|
| LA HAYE | 07-03-1991 | VAN DEN BOSSCHE W.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

9